Europäisches Patentamt

European Patent Office

Office européen des brevets

(11) Veröffentlichungsnummer: **0 269 012**
**A2**

(12) **EUROPÄISCHE PATENTANMELDUNG**

(21) Anmeldenummer: 87117139.3

(51) Int. Cl.⁴: **A23P 1/16 , A23C 13/12**

(22) Anmeldetag: 20.11.87

(30) Priorität: 20.11.86 DE 3639616

(43) Veröffentlichungstag der Anmeldung:
01.06.88 Patentblatt 88/22

(84) Benannte Vertragsstaaten:
AT BE CH ES FR GB LI NL SE

(71) Anmelder: **Hobart GmbH**
**Am Holderstock 4**
**D-7600 Offenburg(DE)**

(72) Erfinder: **Herrmann, Martin, Prof. Dr.-Ing.**
**Bussardhorst 32**
**D-3050 Wunstorf 1(DE)**

(74) Vertreter: **Weber, Dieter, Dr. et al**
**Dr. Dieter Weber und Klaus Seiffert**
**Patentanwälte Gustav-Freytag-Strasse 25**
**Postfach 6145**
**D-6200 Wiesbaden 1(DE)**

(54) **Verfahren und Vorrichtung zum Aufschlagen von flüssigen Substanzen.**

(57) Ein Verfahren zum Aufschlagen von flüssigen Substanzen zeichnet sich dadurch aus, daß zunächst die flüssige Substanz aufgeschäumt und danach durch eine mechanische Behandlung aufgeschlagen wird. Zwischen dem Aufschäumen und dem sich anschließenden Aufschlagen kann eine Ruhezeit vorgegeben werden. Es können abwechselnd aufeinanderfolgend mehrere Aufschäum-und Ruhephasen vorgesehen sein, und in der Aufschäumphase kann zusätzlich eine kontinuierliche oder diskontinuierliche mechanische Behandlung erfolgen. Durch dieses Verfahren wird eine Erhöhung des Aufschlagvolumens erreicht.

EP 0 269 012 A2

## Verfahren und Vorrichtung zum Aufschlagen von flüssigen Substanzen

Die Erfindung betrifft ein Verfahren und eine Vorrichtung zum Aufschlagen von flüssigen Substanzen.

Zur Erläuterung der vorliegenden Erfindung sollen einige technologische Aspekte beim Aufschlagen von Sahne beschrieben werden.

Emulsionen sind heterogene Gemische zweier ineinander unlöslicher Flüssigkeiten, wobei die eine Flüssigkeit in Form kleiner Tröpfchen in der anderen fein verteilt ist. Es kommen die Emulsionstypen Öl in Wasser und Wasser in Öl vor. Die im Dispersionsmittel feinstverteilten Tröpfchen des emulgierten Bestandteiles sind umso beständiger, je kleiner die Grenzflächenspannung zwischen den beiden flüssigen Phasen ist und je kleiner die Tröpfchen sind. Zwei nicht mischbare Flüssigkeiten haben in der Regel eine große Grenzflächenspannung. Die emulgierten Teilchen vereinigen sich unter dem Einfluß der Wärmebewegung zu größeren Tropfen. Es kommt zu einer Entmischung, so daß eine Deemulgierung erfolgt.

Durch Zusatz eines Emulgators läßt sich eine Deemulgierung vermeiden. Emulgatoren setzen die Grenzflächenspannung zwischen Öl und Wasser herab. Es bildet sich ein Film auf der Oberfläche der emulgierten Öltröpfchen. Eine Deemulgierung vollzieht sich nur dann, wenn die Emulgatorschicht beschädigt oder entfernt wird. In der Milch sind die Fettkügelchenhüllen für den Emulsionszustand entscheidend.

Allgemeines zur Bildung und Struktur eines Schaumes:

Schaum wird durch Einblasen eines Gases, z. B. von Luft, gegebenenfalls durch feine Düsen oder -scheibeneinsätze in einer kolloidalen Lösung oder durch heftiges Schlagen bzw. Rühren derselben erzeugt.

Die Ausrichtung der Moleküle grenzflächenaktiver Stoffe in Form einer monomolekularen Schicht an der Grenzfläche des Schaumes kann derart dargestellt werden, daß sich die lipophilen Teile zur Luftseite und die hydrophilen Reste zur Wasserseite orientieren.

Schaum ist ein Sammelbegriff, der für zwei grundsätzlich verschiedene Schaumarten gebraucht wird, nämlich für "Kugelschaum" und für "Polyederschaum".

Der Kugelschaum ist eine konzentrierte Verteilung oder eine Häufung selbständiger Kugelblasen in einem gasigen, flüssigen oder erstarrten Verteilungsmittel. Die Beständigkeit dieser Schaumart, deren Blasen als selbständige Gebilde aufrahmen oder absetzen können, hängt in erster Linie von der Blasengröße und der Viskosität der Verteilungsmittel ab.

Die Blasen können als selbständige Nacktblasen, Filmblasen oder Lamellenblasen vorliegen.

Im Gegensatz zum Kugelschaum mit selbständigen Blasen ist der Polyederschaum ein Verband polyedrisch geformter Blasen, die ihre Selbständigkeit verloren haben. In diesem "Blasenverband" stellt sich ein Gleichgewicht der nach verschiedenen Raumrichtungen wirkenden Kapillarkräfte ein, das nur durch ganz bestimmte Polyederformen verwirklicht werden kann.

Geschlagene Sahne stellt ein kompliziertes System aus verschiedenen Anteilen dar. Dazu gehören Luft, eine wäßrige Phase, flüssiges und festes Fett, sowie kolloidales Eiweiß. Das wäßrige, fettfreie Rahmplasma bildet die kontinuierliche Phase, in der Luftbläschen einerseits bzw. Fettkügelchen und Fettklümpchen andererseits dispergiert sind.

Die Fettkügelchen sind von einer Membran umgeben, die Proteine und Lipoproteine enthält. In der inneren der Fettphase zugewandten Seite der Fettkügelchen-Membran sind Phospholipide (Cholesterin, Carotinoide und Vitamin A) angereichert. In der der wäßrigen Phase zugewandten Seite befinden sich Enzyme und Schwermetalle in Bindung mit Proteinen. In den Grenzflächen gegen Luft als auch gegen Fett liegen grenzflächenaktive Stoffe angereichert vor. Diese Stoffe vermögen Filme auf deren Oberflächen zu bilden und sind von entscheidendem Einfluß auf die Feinheit der eingeschlossenen Luftbläschen. Je feiner die Luftblasen, desto dünner sind die Flüssigkeitslamellen, in denen die wäßrige Phase mit kolloidalem Eiweiß und intakten Fettkügelchen gehalten wird. Je feinblasiger der Schaum, desto geringer ist auch das "Absetzen" d. h. die Flüssigkeitsabgabe. Da diese stark von der Temperatur abhängt (Agglomerationsverfahren) muß das Schlagen bei niedrigen Temperaturen erfolgen, damit viel Fett in fester Form vorliegt. Dieses feste Fett wirkt im Gegensatz zum flüssigen Fett stabilisierend auf den Schaum.

In dem Schaum von geschlagener Sahne muß die Dicke der Flüssigkeitslamellen eine Mindestgröße behalten, da die darin enthaltenen Fettkügelchen nicht zusammenklumpen dürfen (Ausbutterung).

Für das Aufschlagen von Sahne verwendeten wir kontinuierliche und diskontinuierliche Sahneaufschlaggeräte.

Diskontinuierliches Sahneaufschlaggerät:

Ein auf dem Markt befindliches Sahneaufschlaggerät, Hobart G3R, besteht im wesentlichen aus einem offenen Edelstahlbehälter mit langsam laufendem Rührwerk. Der Behälter faßt eine Sahnemenge bis zu 5 l, die mit einem Mal aufgeschlagen wird.

Von der Bodenseite her wird Luft durch sechs runde Scheiben bzw. deren geätzte Rillen in die Sahne eingeblasen, die während des Aufschlagvorganges teilweise ausgerührt wird.

Kontinuierlich arbeitende Sahneaufschlaggeräte:

Bei den kontinuierlichen Sahneaufschlaggeräten ist die Funktionsweise nahezu gleich. Luft und Sahne werden mit Hilfe einer Verdrängerpumpe angesaugt und miteinander vermischt.

Dieses Luft-Sahnegemisch wird in ein Schlagrohr gepumpt, in dem die mechanische Bearbeitung und damit letztlich der Aufschlag erfolgt. Das Innere dieses Schlagrohres ist bei den einzelnen Modellen unterschiedlich ausgearbeitet, wobei verschiedene Einsätze (Stator mit Kanten, Scheiben mit kreisförmig eingefrästen Kanälen) Verwendung finden.

Der Austritt der Sahne erfolgt bei allen Geräten über ein Kopfstück mit nachfolgender Garnierhülse.

Die Geräte sind mit einer Kühlung ausgestattet, um den Rahm auf die erforderliche Aufschlagtemperatur zu kühlen.

Mit diesen Geräten ist eine Volumenzunahme um 300 % gegeben.

Die Aufgabe der vorliegenden Erfindung besteht darin, ein Verfahren anzugeben, mit dem eine höhere Volumenzunahme erreichbar ist sowie eine Vorrichtung zur Durchfhührung des Verfahrens.

Die Untersuchungen mit dem diskontinuierlich arbeitenden Aufschlaggerät haben ergeben, daß das größte Volumen erreicht ist, wenn die Schlagsahne den Schlagwerkzeugen den größten Widerstand entgegensetzt. Durch die Verwendung eines Gleichstrom-/Nebenschlußmotors kann der größte Widerstand, den die Sahne während des Schlagens den Schlagwerkzeugen entgegensetzt, an einem Watt-oder Amperemeter genau festgestellt werden. Das Schlagen wird am Punkt der maximalen Stromaufnahme abgebrochen. Andererseits kann auch als Kriterium das zu messende Drehmoment des Rührwerks oder ein anderes geeignetes Meßkriterium Anwendung finden.

Es muß darauf hingewiesen werden, daß die drei Kriterien

Absetzverhalten, Volumenzunahme und Festigkeit in enger Beziehung zueinander stehen. Während die Volumenzunahme am Punkt der maximalen Stromaufnahme ihr Maximum erreicht, steigert sich die Festigkeit beim Weiterschlagen.

## Beispiel 1

Bei Versuchen machte sich der Erfinder die Überlegung zunutze, daß das Fettkügelchen an der Membran neben dem Hydratwasser noch u. a. adsorbierte Kupfer-und Eisenionen enthält, die Luftsauerstoff bzw. Gase anlagern können. Bei diesen Versuchen hat der Erfinder zuerst in die Sahne Luft eingeschlagen und dann diese Sahne eine gewisse Zeit ohne mechanische Behandlung und ohne weitere Luftzufuhr stehen gelassen. Danach wurde die Sahne mechanisch behandelt, wobei der Sahne teilweise Luft, aber auch keine Luft während des Aufschlagvorganges zugegeben wurde. Hierbei wurde überraschend festgestellt, daß sich ein höherer Aufschlag ergab als bei den auf dem Markt befindlichen Anlagen. Vermutlich erfolgt durch die erfindungsgemäße Behandlung eine verbesserte Anlagerung von Luft an die Grenzfläche der Fettkügelchenmembran.

## Beispiel 2

Bei diesem Versuch wurde in den Rahm zunächst zwei Minuten lang Luft eingeblasen, ohne daß eine mechanische Behandlung stattfand. Anschließend wurde die noch nicht geschlagene Sahne drei Minuten stehen gelassen und im Anschluß vier Minuten gerührt, wobei erneut Luft mit eingeschlagen wurde. Die Volumenzunahme lag bei diesem Versuch knapp über 400 %.

## Beispiel 3

Rahm wurde nach dem Beispiel 2 aufgeschäumt und in einer kontinuierlichen Apparatur (bekannt) ohne bzw. mit zusätzlicher Luftzufuhr aufgeschlagen. Hierbei ergab sich ebenfalls eine erhöhte Volumenzunahme. Ein Aufschäumen kann hierbei auch während des Aufschlagens erfolgen bzw. wird die Sahne weiter aufgeschäumt, bevor sie aufgeschlagen wird.

## Beispiel 4

Rahm wird mit einem diskontinuierlich arbeitenden Aufschlaggerät abwechselnd aufgeschäumt und in Ruhe gelassen, wobei auch während des Aufschäumens eine mechanische Behandlung (z. B. Rühren) erfolgen kann. Nach einer Behandlungszeit in diesen Intervallen (Intervallzeit 10 s bis beispielsweise 2 Minuten) von etwa 4 bis 15 Minuten Gesamtbehandlungszeit erfolgte ein weiteres Aufschäumen, wobei gleichzeitig eine mechanische Behandlung in Form eines Ausrührens der eingeschlagenen Luft erfolgt, bis die Sahne den erforderlichen Aufschlag bzw. die gewünschte Standfestigkeit aufweist. Auch über den Weg des intervallmäßigen Aufschäumens in Vergleich zu der Bearbeitung nach Beispiel 2 konnte festgestellt werden, daß ein höherer Aufschlag als bei dem konventionellen Verfahren erzielt werden konnte. Diese Arbeitsweise kann auch analog für kontinuierliche Prozesse angewandt werden, wobei der eingegebenen Luft bzw. dem eingegebenen Gas genügend Zeit gegeben werden muß, sich an der Oberfläche der Fettkügelchen anzulagern.

Beispiel 5

Aus dem Vorgenannten geht hervor, daß für den Aufschlag von Schaummassen eine gute Luftverteilung vorhanden sein muß. Die Versuche haben gezeigt, daß über eine Verdoppelung des Düsenscheibeneinsatzes unter Berücksichtigung einer gleichmäßigen Luftverteilung eine Volumenerhöhung im Vergleich zum einfachen Düsenscheibeneinsatz gegeben ist. Weiterhin kann dieser Düsenscheibeneinsatz durch eine entsprechende Folie, die einerseits luftdurchlässig, andererseits aber wasserundurchlässig ist, ersetzt werden. Hierbei beiten sich u. a. Folien an, die in abgewandelter Form bei der Ultrafiltration eingesetzt werden. In anderer Hinsicht haben sich auch Kunststoffmaterialien als geeignet erwiesen, die als atmungsaktive Materialien u. a. in der Bekleidungsindustrie Verwendung finden.

Hierfür sind beispielsweise wasserdampfdurchlässige, aber wasserdichte Materialien, wie Mikrofasergewebe und mikroporöse Gewebe oder mikroporös beschichtete Gewebe und wasserdampfdurchlässige kompaktbeschichtete Gewebe geeignet. Als weitere Beispiele können hier Meraklon oder eine KunststoffVlies bzw. Zweilagen-Laminate mit PES-Membran, Dreilagen-Laminate mit PTE-Membran, PUR-beschichtetes elastisches Gewebe usw. genannt werden.

Von Interesse ist hierbei eine gute Luft-bzw. Gasdurchlässigkeit. Auf der anderen Seite soll Wasser bzw. Flüssigkeit oder andere Stoffe der aufzuschlagenden Masse nicht durch diese Folie oder dieses äußerst feinmaschige Sieb durchdringen können. Die Versuche haben hierbei gezeigt, daß mit einer geeigneten Vorrichtung über diese "Siebfolie" eine sehr gute gleichmäßige, homogene Luftkügelchenverteilung bei nahezu gleichem Luftkügelchendurchmesser erreicht wird, der sich positiv auf die Schaum-, Aufschlag-und Standeigenschaften auswirkt.

Das oben beschriebene Verfahren ist nicht nur zum Aufschlagen von Rahm, sondern auch für andere aufschäumbare flüssige Substanzen geeignet.

Nachfolgend sollen Vorrichtungen zur Durchführung des erfindungsgemäßen Verfahrens beschrieben werden anhand von drei in der beigefügten Zeichnung dargestellten beispielhaften Ausführungsformen.

Es zeigt:

Fig. 1 schematisch den grundsätzlichen Aufbau eines Sahneaufschlaggerätes mit erfindungsgemäßer gasdurchlässiger, jedoch flüssigkeitsundurchlässiger Einrichtung,

Fig. 2 und 3 spezielle Ausführungsformen von Einrichtungen zum Aufschäumen einer flüssigen Substanz.

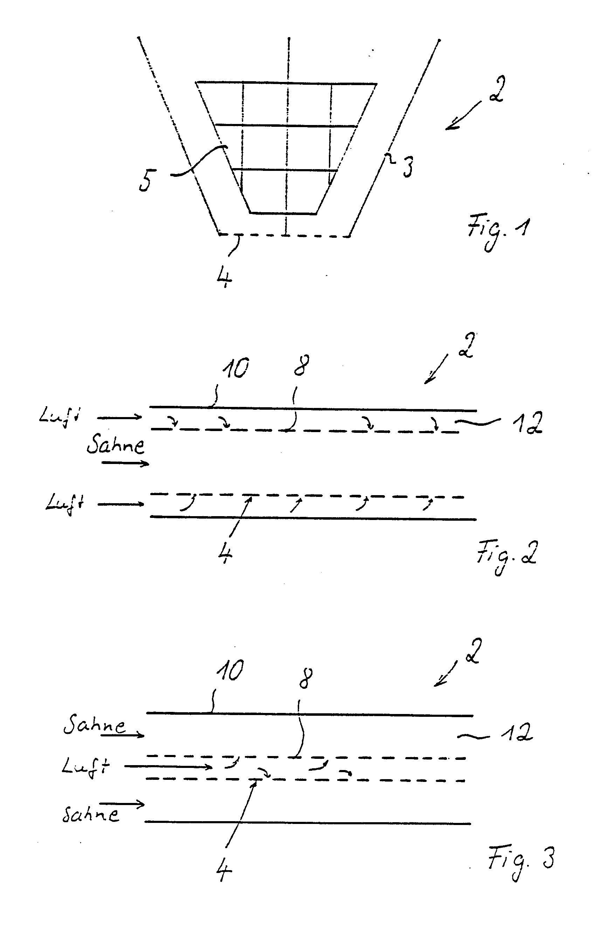

Die Fig. 1 zeigt eine Aufschäumvorrichtung 2, bestehend aus einem offenen Edelstahlbehälter 3, dessen Boden aus einer Einrichtung 4 aus einem gasdurchlässigen, jedoch flüssigkeitsundurchlässigen Material besteht. In dem Behälter 3 findet sich ein Rührwerk 5.

Die Fig. 2 zeigt eine Aufschäumvorrichtung 2, bei der die Einrichtung 4 aus einem gasdurchlässigen, jedoch flüssigkeitsundurchlässigen Material die Form eines Schlauches oder eines Rohres 8 hat, durch den bzw. das Sahne hindurchgefördert wird. Zum Aufschäumen wird durch die Wandung des Schlauches bzw. Rohres Gas in das Innere des Schlauches bzw. Rohres eingeblasen. Die Sahne kann mit Hilfe einer Pumpe durch die Einrichtung 4 bzw. 8 hindurchgefördert werden. Zur Förderung der Sahne kann aber auch innerhalb des Schlauches bzw. des Rohres 8 eine Schneckenfördereinrichtung angeordnet sein (nicht dargestellt). Um den Schlauch 8 herum befindet sich ein Rohr 10 aus Metall oder Kunststoff, dessen Durchmesser größer ist als der Durchmesser des Schlauches bzw. Rohres, derart, daß ein Ringraum 12 entsteht, in den das Gas bzw. die Luft eingeblasen werden kann.

Die Fig. 3 zeigt eine Aufschäumvorrichtung, die ähnlich aufgebaut ist wie die nach Fig. 2. Zum Unterschied zur Ausführungsform nach Fig. 2 wird allerdings bei dieser Ausführungsform die Luft in den Schlauch bzw. das Rohr 8 eingeblasen, während die Sahne den Ringraum 12 durchströmt. Die Luft tritt also durch das gas-bzw. luftdurchlässige Rohr 8 zum Aufschäumen der Sahne in den Ringraum 12 ein.

**Ansprüche**

1. Verfahren zum Aufschlagen von flüssigen Substanzen, dadurch gekennzeichnet, daß die flüssige Substanz zunächst aufgeschäumt und danach durch eine mechanische Behandlung mit gleichzeitiger oder ohne gleichzeitige Gaszuführung aufgeschlagen wird.

2. Verfahren nach Anspruch 1, dadurch gekennzeichnet, daß zwischen dem Aufschäumungsvorgang und dem nachfolgenden Aufschlagen eine Ruhezeit eingeschaltet wird.

3. Verfahren nach Anspruch 2, dadurch gekennzeichnet, daß nach Ablauf der Ruhezeit ein weiteres Aufschäumen erfolgt.

2. Verfahren nach Anspruch 3, dadurch gekennzeichnet, daß in der Aufschäumphase eine kontinuierliche oder diskontinuierliche mechanische Behandlung (insbesondere zum Ausrühren der Gas-bzw. Luftbläschen) erfolgt.

5. Verfahren nach einem der vorhergehenden Ansprüche, dadurch gekennzeichnet, daß zur Erzielung eines optimalen Aufschlagergebnisses der sich ergebende Widerstand während des Aufschlagens im Produkt als Meßparameter berücksichtigt wird.

6. Verfahren nach einem der vorhergehenden Ansprüche, dadurch gekennzeichnet, daß die Ruhezeit bei einer aufzuschlagenden Menge von 5 kg etwa zwei Minuten beträgt oder daß die Ruhezeit in Abhängigkeit von der aufzuschlagenden Menge und der flüssigen Substanz eingestellt wird.

7. Verfahren nach einem der vorhergehenden Ansprüche, dadurch gekennzeichnet, daß das Aufschäumen mit Hilfe sehr klein verteilter Luft-bzw. Gasblasen erfolgt.

8. Verfahren nach einem der vorhergehenden Ansprüche, dadurch gekennzeichnet, daß es sich bei den flüssigen Substanzen um Lebensmittel, vorzugsweise um aufzuschlagenden Rahm handelt.

9. Vorrichtung zur Durchführung des Verfahrens mit einer Aufschäumvorrichtung, dadurch gekennzeichnet, daß die Aufschäumvorrichtung (2) eine Einrichtung (4) aus einem gasdurchlässigen, jedoch flüssigkeitsundurchlässigen Material aufweist.

10. Vorrichtung nach Anspruch 9, dadurch gekennzeichnet, daß die Einrichtung (4) eine Folie, Membran, ein Sieb, ein Mikrofasergewebe, ein wasserdampfdurchlässiges Gewebe, ein mikroporös beschichtetes Gewebe oder ein wasserdampfdurchlässiges kompaktbeschichtetes Gewebe ist.

11. Vorrichtung nach Anspruch 9 oder 10, dadurch gekennzeichnet, daß die Einrichtung in Form eines Siebbodens (6) oder eines Schlauches bzw. Rohres (8) ausgebildet ist.

Fig. 1

Fig. 2

Fig. 3